# EUROPÄISCHE PATENTSCHRIFT

(11) **EP 2 111 973 B1**
(45) Veröffentlichungstag und Bekanntmachung des Hinweises auf die Patenterteilung: **29.06.2011**
(21) Anmeldenummer: 08019518.3
(22) Anmeldetag: 07.11.2008
(51) Int. Cl.: B31B 1/64

(54) **Vorrichtung und Verfahren zum Siegeln von Packungen**
Device and method for sealing packages
Dispositif et procédé destinés au scellement d'emballages

(30) Priorität: 19.12.2007 DE 102007061245
(43) Veröffentlichungstag der Anmeldung: 28.10.2009
(73) Patentinhaber: Multivac Sepp Haggenmüller GmbH & Co. KG, 87787 Wolfertschwenden (DE)
(72) Erfinder: Mößnang, Konrad, 89350 Mindelaltheim (DE)
(74) Vertreter: Grünecker, Kinkeldey, Stockmair & Schwanhäusser Anwaltssozietät

(56) Entgegenhaltungen:
- US-A- 2 730 161
- US-A- 2 743 761

## Beschreibung

Die vorliegende Erfindung bezieht sich auf eine Vorrichtung und ein Verfahren zum Siegeln von Packungen.

Im Bereich der Verpackung von z.B. medizinischen Sterilgütern wird durch Qualifizierungsstellen eine Validierung des Verpackungsprozesses vorgeschrieben. Die Validierung soll sicherstellen, dass der Prozess mit den gleichen Parametern stets zum gleichen Ergebnis führt. Dies betrifft unter anderem auch die Verpackungsmaschine selbst. Eine Komponente, die validiert wird, ist die Siegelschiene. Um die Reproduzierbarkeit einer Siegelnaht zu gewährleisten, müssen die Prozessparameter Siegelzeit, Siegeldruck und Siegeltemperatur in der Realität auch den eingestellten Vorgaben entsprechen.

Beim verbreiteten Konzept der Impulssiegelung, bei der ein Draht durch einen Stromimpuls erhitzt wird, ist die Validierung der Siegelzeit ohne weiteres möglich. Ebenso kann der Siegeldruck über die Membran, die den Druck ausübt, indirekt gemessen werden. Die Siegeltemperatur kann jedoch nicht eingestellt werden. Sie ergibt sich aus der Siegelzeit, der Restwärme aus dem vorherigen Siegelvorgang, der Umgebungstemperatur, dem Widerstand des Drahts und der angelegten Spannung. Eine direkte Vorgabe der Siegeltemperatur ist nicht möglich, da die kleine Masse des Drahts und die Kürze der Siegelzeit weder eine Messung, noch eine Regelung des Heizprozesses zulassen. Deshalb wurden validierbare Siegelverfahren entwickelt.

Bei einem solchen Verfahren, thermo contolled (TC) wird ein massives Aluminiumprofil dauerhaft beheizt. Durch die zeitliche Entschärfung, die wesentlich höhere Masse und die damit einhergehende thermische Pufferkapazität kann die Siegeltemperatur mit ausreichender Genauigkeit geregelt werden. Für gängiges, hochwertiges Verpackungsmaterial, das faltenfrei, also manuell in die Maschine eingelegt wird, produziert dieses Verfahren akzeptable Siegelergebnisse. Bei der Verwendung von kostengünstigeren Verpackungsmaterialien ist eine Siegelung mit einer dauerhaft beheizten Siegelschiene aufgrund des begrenzten Prozessfensters schwierig. Soll das Produkt z.B. mit einer automatischen Kammerbandmaschine verpackt werden, führen die unvermeidlichen Falten im Siegelbereich dazu, dass die Verpackung nicht einwandfrei versiegelt wird. Da die Wärme bei einer einseitigen Siegelung durch alle Folienlagen durchtreten muss, werden entweder die oberen Schichten zu heiß und fließen davon oder die unteren Schichten werden unzureichend erhitzt, was dazu führt, dass die Falten nicht durchgesiegelt werden.

Eine nahe liegende Lösung, wie sie auch beim Impulssiegelverfahren eingesetzt wird, ist die Verwendung einer zweiten Siegelschiene. Der Beutel wird dann sowohl von oben, als auch von unten beheizt.

Die Realisierung einer sicheren Oben-Unten-Siegelungsvor-richtung ist allerdings mit zwei Siegelschienen aus z.B. Aluminium schwierig. Bei Foliendicken von 100µm und weniger müssen die Siegelschienen extrem plan und entsprechen genau zueinander ausgerichtet sein, da sonst der Siegeldruck nicht gleichmäßig anliegt. Zusätzlich zu den thermischen Verformungen während des Betriebs sind die Siegelschienen fertigungsbedingt konkav oder konvex ausgebildet, so dass Spalte von 0,1 bis 0,3mm entstehen. Dies ist beim Siegeln, insbesondere bei medizinischen Produkten, nicht zulässig.

Eine gattungsgemäße Vorrichtung zum Siegeln von Packungen ist aus der US 2,743,761 bekannt.

Die Aufgabe der vorliegenden Erfindung ist es, eine Siegelschiene bereitzustellen, die die oben genannten Probleme der aus den fertigungsbedingten Toleranzen resultierenden mangelnden Planheit einer Siegelschiene besonders gut löst. Vorteilhafterweise soll die Qualität der Siegelnaht hierbei erhöht werden.

Die Aufgabe wird gelöst durch eine Vorrichtung gemäß Anspruch 1. Die Aufgabe wird außerdem gelöst durch ein Verfahren gemäß Anspruch 11. Weiterbildungen der Erfindung sind jeweils in den Unteransprüchen angegeben.

Mit der erfindungsgemäßen Siegelschiene können beim Siegelvorgang fertigungsbedingte Toleranzen bzw. thermische Verformungen durch das an einer Siegelfläche vorgesehene Metallgeflecht ausgeglichen werden. Zusätzlich zu der gewünschten Nachgiebigkeit, um Toleranzen und Verkippungen auszugleichen, wird durch das metallische Material eine gute Wärmeleitung für eine optimale Sieglung ermöglicht. Dies ist beispielsweise bei medizinischen Produkten, die verpackt werden sollen, unerlässlich bzw. gesetzlich gefordert. Da bei der Herstellung der Siegelschienen durch die anschließende Integration des Metallgeflechts keine hohen Anforderungen an die Formgenauigkeit gestellt werden müssen, ist die Fertigung der Siegelschienen so erheblich kostengünstiger.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Gesamtansicht einer Ver- packungsmaschine am Beispiel einer Kammer- maschine;
- Fig. 2: eine schematische Querschnittsdarstellung einer Oben-Unten-Siegelstation;
- Fig. 3a: eine Querschnittsdarstellung einer oberen und einer unteren Siegelschiene in Ruhepo- sition vor der Siegelung;
- Fig. 3b: eine Querschnittsdarstellung einer oberen und einer unteren Siegelschiene in Siegel- position;
- Fig. 3c: eine Querschnittsdarstellung einer oberen und einer unteren Siegelschiene in Ruhepo- sition nach der Siegelung;
- Fig. 4a: eine Querschnittsdarstellung einer um die z-Achse verkippten oberen und einer unteren Siegelschiene in Ruheposition;
- Fig. 4b: eine Querschnittsdarstellung einer um die z-Achse verkippten oberen und einer unteren Siegelschiene in Siegelposition;
- Fig. 5a: eine Querschnittsdarstellung einer unebenen oberen und einer unteren Siegelschiene in Ruheposition;
- Fig. 5b: eine Querschnittsdarstellung einer unebenen oberen und einer unteren Siegelschiene in Siegelposition;
- Fig. 6a: eine Seitenansicht einer um die x-Achse verkippten oberen und einer unteren Siegel- schiene in Ruheposition;
- Fig. 6b: eine Seitenansicht einer um die x-Achse verkippten oberen und einer unteren Siegel- schiene in Siegelposition;
- Fig. 7a: eine Seitenansicht einer unebenen oberen und einer unteren Siegelschiene in Ruhepo- sition;
- Fig. 7b: eine Seitenansicht einer unebenen oberen und einer unteren Siegelschiene in Siegel- position.

Im Folgenden wird mit Bezug auf die Figuren eine erste Ausführungsform der vorliegenden Erfindung beispielhaft an einer Kammermaschine beschrieben.

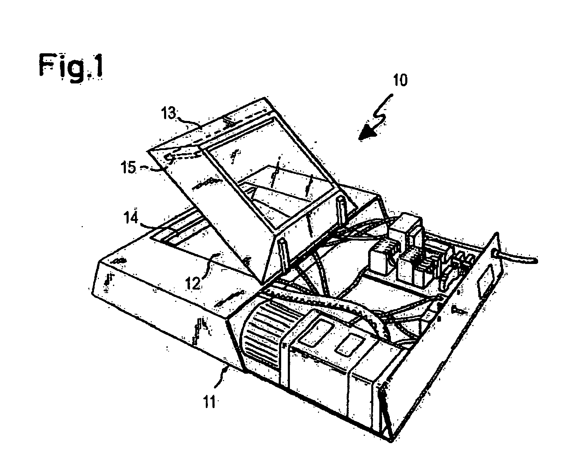

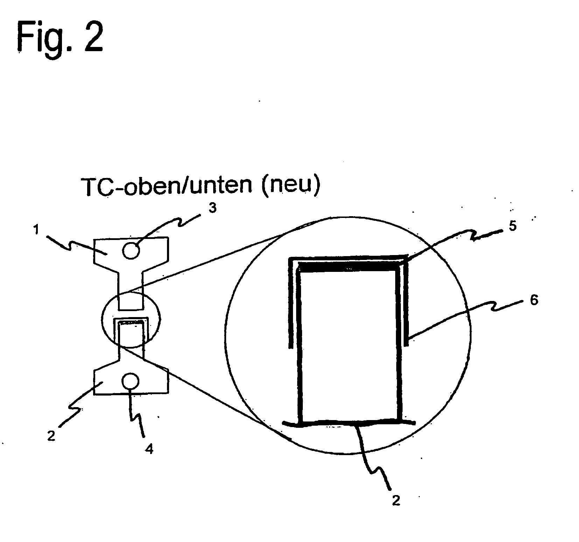

Fig. 1 zeigt eine Kammermaschine 10 mit einem Gehäuse 11, einem Kammerboden 12 und einem Deckel 13. Im Deckel 13 ist ein Siegelelement 15 vorgesehen, das beim Schließen des Deckels 13 mit dem Gegendruckelement 14 zusammen wirkt. Auf diese Weise kann beispielsweise ein Beutel gesiegelt werden. Das Siegelement 15 und das Gegendruckelement 14 werden in den Figuren 2 bis 7 näher beschrieben. Das Siegelelement 15 entspricht hierbei einer ersten Siegelschiene 1 und das Gegendruckelement entspricht einem Widerlager bzw. einer zweiten Siegelschiene 2.

Fig. 2 zeigt eine Querschnittsdarstellung der oberen ersten Siegelschiene 1 mit einer ersten Heizvorrichtung 3 und der unteren zweiten Siegelschiene 2 mit einer zweiten Heizvorrichtung 4. Die Heizvorrichtungen 3, 4 verlaufen in Form von Heizstäben bzw. Rohrheizkörpern über die gesamte Länge der Siegelschienen 1, 2 und sind in der gezeigten Ausführungsform in der Siegelschiene 1, 2 vorgesehen. Bei der Verwendung von zwei beheizten Siegelschienen 1, 2 erfolgt der Wärmeeintrag von beiden Seiten, was besonders bei dicken Folien für eine sichere Siegelung vorteilhaft ist.

In der vergrößerten Ansicht in Fig. 2 ist die untere zweite Siegelschiene 2 gezeigt. Sie ist an ihrer Oberseite mit einem zusammendrückbaren elastischen Material 5 in Form eines Metallgeflechts 5 versehen, welches sich über eine gesamte Siegelfläche 9 erstreckt. Auf diese Weise kann unabhängig von Unebenheiten oder Formtoleranzen der metallischen Siegelschienen 1, 2 mit konstantem Siegeldruck optimal gesiegelt werden. Über dem Metallgeflecht 5 ist ein Halteband 6, z.B. ein Teflonband vorgesehen, das ebenfalls über die gesamte Siegelfläche 9 der Siegelschiene verläuft. Das Band verhindert ein Ankleben der Siegelschiene an dem Verpackungsmaterial bzw. an der verwendeten Folie. Zusätzlich hält das Band 6 das Metallgeflecht in der gewünschten Form auf der Siegelschiene. Das Band 6 kann z.B. durch Kleben an der Siegelschiene befestigt werden.

Das Metallgeflecht 5 kann eine Vielzahl von Formabweichungen ausgleichen und sorgt daher immer für einen konstanten Siegeldruck, was eine optimale Qualität der Siegelnähte garantiert. Es kann z.B. in gewebter Form verwendet werden, also mit Längs- und Querfasern. Auch andere Ausführungsformen wie z.B. ein stahlwolleartiges Gewebe sind denkbar.

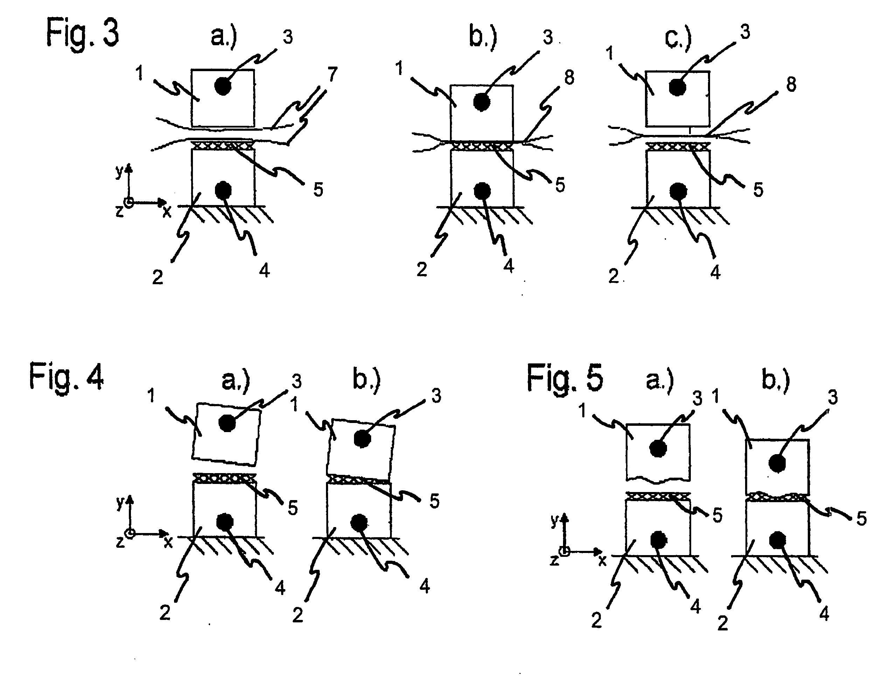

Mit Bezug auf die Figuren 3 bis 7 wird im folgenden der Betrieb der erfindungsgemäßen Vorrichtung bzw. das erfindungsgemäße Verfahren beschrieben.

Fig. 3a zeigt eine Querschnittsdarstellung der ersten Siegelschiene 1 und der zweiten Siegelschiene 2, die mit dem Metallgeflecht 5 versehen ist, in der Ruheposition, wobei die beiden Siegelschienen, wie bereits in Fig. 2 gezeigt ist, mit den Heizvorrichtungen 3, 4 versehen sind. Zwischen den beiden Siegelschienen 1, 2 ist ein Verpackungsmaterial 7, z.B. in Form eines Beutels mit Oberfolie und Unterfolie zu sehen, das wie in Fig. 3b zu sehen ist, beim Siegelvorgang zusammen gesiegelt wird. Dabei entsteht eine Siegelnaht 8. Fig. 3c zeigt die beiden Siegelschienen 1, 2 in der Ausgangsposition bzw. der Ruheposition und die hergestellte Siegelnaht 8. Die Siegelschienen 1, 2 können beispielsweise im Querschnitt T-fömig ausgebildet sein. Auf diese Weise sind die Schienen stabiler und dienen gleichzeitig als Energiepuffer, der einen konstanten Wärmeeintrag in das zu versiegelnde Verpackungsmaterial einbringt, wodurch die Qualität der Siegelnaht 8 erhöht wird.

Fig. 4a,b zeigen wie in Fig. 3a,b die erste und die zweite Siegelschiene 1, 2 in Ruhe- bzw. in Siegelposition. Die erste Siegelschiene 1 ist hierbei gegenüber der zweiten Siegelschiene 2 um ihre Längsachse, also um die z-Achse verkippt. In Fig. 4b ist gezeigt wie das Metallgeflecht 5 die Verkippung der ersten Siegelschiene 1 beim Siegelvorgang ausgleicht.

Fig. 5a,b zeigen wie in Fig. 4a,b die erste und die zweite Siegelschiene 1, 2 in Ruhe- bzw. in Siegelposition. Die erste Siegelschiene 1 ist hierbei z.B. bedingt durch Fertigungstoleranzen uneben ausgebildet. In Fig. 5b ist gezeigt wie das Metallgeflecht 5 die Unebenheit der ersten Siegelschiene 1 beim Siegelvorgang ausgleicht.

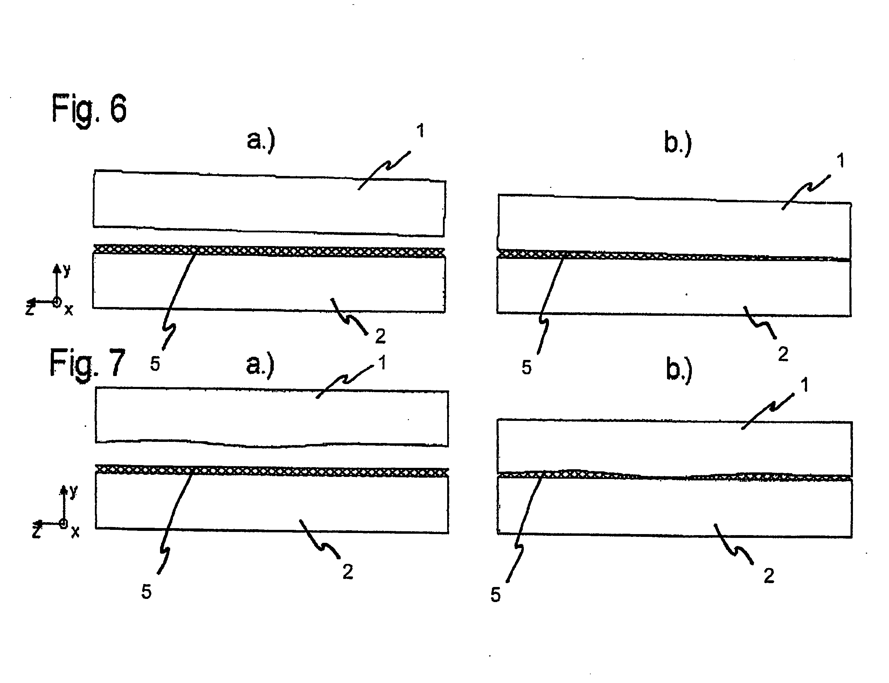

Fig. 6a zeigt eine Seitenansicht der ersten und zweiten Siegelschiene 1, 2. Die erste Siegelschiene 1 ist hierbei gegenüber der zweiten Siegelschiene 2 in einer vertikalen Ebene, also um die x-Achse verkippt. In Fig. 6b ist gezeigt wie das Metallgeflecht 5 die Verkippung der ersten Siegelschiene 1 ausgleicht.

Fig. 7a zeigt eine Seitenansicht der ersten und zweiten Siegelschiene 1, 2. Die erste Siegelschiene 1 ist hierbei z.B. bedingt durch Formtoleranzen uneben ausgebildet. In Fig. 7b ist gezeigt wie das Metallgeflecht 5 die Unebenheit der ersten Siegelschiene 1 ausgleicht.

Die Siegelschienen sind nicht auf eine T-förmige Querschnittsform beschränkt. Sämtliche Formgestaltungen, wie z.B. eine Vierkant- oder Dreikantform der Siegelschienen sind denkbar.

Statt eines Teflonbands auf der Siegelschiene sind auch Bauteile mit anderen Anti-Haft-Materialien denkbar. Statt eines Bands, das mit der Siegelschiene verklebt wird, sind auch andere Befestigungsmechanismen wie Z.B. Nieten oder Klemmen denkbar.

Die Erfindung ist auch nicht auf den Einsatz in Kammermaschine beschränkt. Die erfindungsgemäße Vorrichtung kann in jeder Verpackungsmaschine, wie z.B. einer Tiefzieh- oder Bandmaschine, in der gesiegelt wird, verbaut werden.

Die einzelnen Merkmale der beschriebenen Ausführungsform sind miteinander frei kombinierbar.

## Patentansprüche

1. Vorrichtung zum Siegeln von Packungen mit einer Siegelschiene (1, 2), wobei an der Siegelschiene (1, 2) auf einer Siegelfläche ein zusammendrückbares wärmeleitendes Material (5) vorgesehen ist,
**dadurch gekennzeichnet,**
**dass** das Material (5) ein Metallgeflecht (5) ist.

2. Vorrichtung gemäß Anspruch 1, **dadurch gekennzeichnet, dass** das Material (5) elastisch ist.

3. Vorrichtung gemäß einem der Ansprüche 1 oder 2, **dadurch gekennzeichnet, dass** mindestens eine erste Siegelschiene (1) und ein Widerlager (2) vorgesehen sind.

4. Vorrichtung gemäß einem der Ansprüche 1 bis 3, **dadurch gekennzeichnet, dass** die Siegelschiene (1, 2) eine erste Siegelschiene (1) ist und dass eine zweite Siegelschiene (2) als Widerlager vorgesehen ist, zwischen denen die Siegelung erfolgt.

5. Vorrichtung gemäß Anspruch 4, **dadurch gekennzeichnet, dass** die erste Siegelschiene (1) und die zweite Siegelschiene (2) jeweils eine Kontaktfläche aufweisen, die dazu angepasst sind, dazwischen Verpackungsmaterial (7) aufzunehmen.

6. Vorrichtung gemäß einem der Ansprüche 4 oder 5, **dadurch gekennzeichnet, dass** das zusammendrückbare wärmeleitende Material (5) an einer Siegelschiene (1, 2) oder an beiden Siegelschienen vorgesehen ist.

7. Vorrichtung gemäß einem der Ansprüche 1 bis 6, **dadurch gekennzeichnet, dass** sich das zusammendrückbare wärmeleitende Material (5) über die gesamte Siegelfläche der Siegelschiene (1, 2) erstreckt.

8. Vorrichtung gemäß einem der Ansprüche 1 bis 7, **dadurch gekennzeichnet, dass** an der der Siegelschiene (1, 2) abgewandten Seite des zusammendrückbaren wärmeleitenden Materials (5) ein Band (6) vorgesehen ist.

9. Vorrichtung gemäß Anspruch 8, **dadurch gekennzeichnet, dass** das Band (6) ein Teflonband ist.

10. Vorrichtung gemäß einem der Ansprüche 1 bis 9, **dadurch gekennzeichnet, dass** mindestens eine Siegelschiene (1, 2) eine Heizvorrichtung (3, 4) aufweist.

11. Verfahren, bei dem eine erste Siegelschiene (1) gegen ein Widerlager (2) drückt, wobei an der ersten Siegelschiene (1) ein zusammendrückbares, wärmeleitendes Material (5) vorgesehen ist, **dadurch gekennzeichnet, dass** das Material (5) ein elastisches Metallgeflecht ist.

12. Verfahren gemäß Anspruch 11, **dadurch gekennzeichnet, dass** eine zweite Siegelschiene (2) das Widerlager bildet.

13. Verfahren gemäß Anspruch 12, **dadurch gekennzeichnet, dass** zwischen der ersten Siegelschiene (1) und der zweiten Siegelschiene (2) eine Folie (7) aufgenommen wird.

14. Verfahren gemäß Anspruch 13, **dadurch gekennzeichnet, dass** die Folie (7) über die gesamte Fläche der Siegelschiene (1, 2) mit konstantem Druck gesiegelt wird.

15. Verfahren gemäß einem der Ansprüche 11 bis 14, **dadurch gekennzeichnet, dass** das Metallgeflecht (5) Verkippungen und/oder fertigungsbedingte Toleranzen der Siegelschienen (1, 2) ausgleicht.

## Claims

1. An apparatus for sealing packagings with a sealing rail (1,2), wherein at the sealing rail (1,2) a compressible heat-conducting material (5) is provided on a sealing surface,
**characterised in**
**that** the material (5) is a metal netting (5).

2. A apparatus according to Claim 1, **characterised in that** the material (5) is elastic.

3. An apparatus according to either Claim 1 or Claim 2, **characterised in that** at least one first sealing rail (1) and an abutment (2) are provided.

4. An apparatus according to any one of Claims 1 to 3, **characterised in that** the sealing rail (1,2) is a first sealing rail, and **in that** a second sealing rail (2) is provided as an abutment, between which the sealing takes place.

5. An apparatus according to Claim 4, **characterised in that** the first sealing rail (1) and the second sealing rail (2) each have a contact face, which are adapted so as to receive packaging material (7) between them.

6. An apparatus according to either Claim 4 or Claim 5, **characterised in that** the compressible heat-conducting material (5) is provided on one sealing rail (1,2) or on both sealing rails.

7. An apparatus according to any one of Claims 1 to 6, **characterised in that** the compressible heat-conducting material (5) extends over the entire sealing surface of the sealing rail (1,2).

8. An apparatus according to any one of the Claims 1 to 7, **characterised in that** a strip (6) is provided on the side of the compressible heat-conducting material (5) facing away from the sealing rail (1, 2).

9. An apparatus (1) according to Claim 8, **characterised in that** the strip (6) is a Teflon strip.

10. An apparatus according to any one of Claims 1 to 9, **characterised in that** at least one sealing rail (1,2) has a heating device (3,4).

11. A method in which a first sealing rail (1) presses against an abutment (2), wherein on the first sealing rail (1) a compressible heat-conducting material (5) is provided, **characterised in that** the material is an elastic metal netting.

12. A method according to Claim 11, **characterised in that** a second sealing rail (2) forms the abutment.

13. A method according to Claim 12, **characterised in that** a film (7) is accommodated between the first sealing rail (1) and the second sealing rail (2).

14. A method according to Claim 13, **characterised in that** the film (7) is sealed at constant pressure over the entire surface of the sealing rail (1,2).

15. A method according to any one of Claims 11 to 14, **characterised in that** the metal netting (5) compensates for tilting and/or manufacturing tolerances in the sealing rails (1,2).

## Revendications

1. Dispositif pour sceller des emballages avec une barre de scellage (1, 2), étant précisé qu'il est prévu sur la barre de scellage (1, 2), sur une surface de scellage, un matériau compressible conducteur de chaleur (5),
**caractérisé en ce que** le matériau (5) est constitué par un treillis métallique (5).

2. Dispositif selon la revendication 1, **caractérisé en ce que** le matériau (5) est élastique.

3. Dispositif selon l'une des revendications 1 ou 2, **caractérisé en ce qu'**il est prévu au moins une première barre de scellage (1) et un élément d'appui (2).

4. Dispositif selon l'une des revendications 1 à 3, **caractérisé en ce que** la barre de scellage (1, 2) est constituée par une première barre de scellage (1) et **en ce qu'**une seconde barre de scellage (2) est prévue comme élément d'appui, le scellage se faisant entre les deux.

5. Dispositif selon la revendication 4, **caractérisé en ce que** la première barre de scellage (1) et la seconde barre de scellage (2) présentent des surfaces de contact respectives qui sont aptes à recevoir entre elles un matériau d'emballage (7).

6. Dispositif selon l'une des revendications 4 ou 5, **caractérisé en ce que** le matériau compressible conducteur de chaleur (5) est prévu sur une barre de scellage (1, 2) ou sur les deux barres de scellage.

7. Dispositif selon l'une des revendications 1 à 6, **caractérisé en ce que** le matériau compressible conducteur de chaleur (5) s'étend sur toute la surface de scellage de la barre de scellage (1, 2).

8. Dispositif selon l'une des revendications 1 à 7, **caractérisé en ce qu'**il est prévu sur le côté du matériau compressible conducteur de chaleur (5) opposé à la barre de scellage (1, 2) une bande (6).

9. Dispositif selon la revendication 8, **caractérisé en ce que** la bande (6) est constituée par une bande de Téflon.

10. Dispositif selon l'une des revendications 1 à 9, **caractérisé en ce qu'**au moins une barre de scellage (1, 2) comporte un dispositif chauffant (3, 4).

11. Procédé selon lequel une première barre de scellage (1) appuie contre un élément d'appui (2), étant précisé qu'il est prévu sur la première barre de scellage (1) un matériau compressible conducteur de chaleur (5), **caractérisé en ce que** le matériau (5) est constitué par un treillis métallique élastique.

12. Procédé selon la revendication 11, **caractérisé en ce qu'**une seconde barre de scellage (2) forme l'élément d'appui.

13. Procédé selon la revendication 12, **caractérisé en ce qu'**un film (7) est reçu entre la première barre de scellage (1) et la seconde barre de scellage (2).

14. Procédé selon la revendication 13, **caractérisé en ce que** le film (7) est scellé sur toute la surface de la barre de scellage (1, 2) avec une pression constante.

15. Procédé selon l'une des revendications 11 à 14, **caractérisé en ce que** le treillis métallique (5) compense des basculements et/ou des tolérances des barres de scellage dues à la fabrication.
